# EUROPÄISCHE PATENTSCHRIFT

(11) **EP 1 323 278 B1**
(45) Veröffentlichungstag und Bekanntmachung des Hinweises auf die Patenterteilung: **08.06.2005**
(21) Anmeldenummer: 01978182.2
(22) Anmeldetag: 21.09.2001
(51) Int. Cl.: H04L 29/06, H04L 12/28, H04L 29/12

(54) **VERFAHREN ZUM ANSCHLUSS VON DATENENDEINRICHTUNGEN AN EIN DATENNETZ**
METHOD FOR CONNECTION OF DATA TERMINAL DEVICES TO A DATA NETWORK
PROCEDE DE RACCORDEMENT DE DISPOSITIFS TERMINAUX DE DONNEES A UN RESEAU DE DONNEES

(30) Priorität: 29.09.2000 DE 10048487
(43) Veröffentlichungstag der Anmeldung: 02.07.2003
(73) Patentinhaber: SIEMENS AKTIENGESELLSCHAFT, 80333 München (DE)
(72) Erfinder: LUPPER, Alfred, 86482 Aystetten (DE); MORPER, Hans-Jochen, 85253 Erdweg (DE); RIEGEL, Maximilian, 90409 Nürnberg (DE)
(86) Internationale Anmeldenummer: PCT/DE2001/003656
(87) Internationale Veröffentlichungsnummer: WO 2002/028013

(56) Entgegenhaltungen:
- EP-A- 0 999 672
- WO-A-99/52237
- WO-A-99/66400

## Beschreibung

Die Erfindung bezieht sich auf ein Verfahren zum Anschluß zumindest einer Station an ein Datennetz, ein entsprechendes Datennetz und eine entsprechende Zugangseinrichtung.

In leitungsgebundenen Kommunikationssystemen findet eine Kommunikation zwischen miteinander verdrahteten Teilnehmerstationen statt, wobei zwischen diese in der Regel Vermittlungsstellen zwischengeschaltet sind. Im Falle eines Datenzugangs, vor allem in solchen leitungsgebundenen Kommunikationssystemen, erfolgt die Steuerung von Verbindungen zwischen einer Teilnehmerstation und einem Zugangsnetz zumeist über ein Punkt-zu-Punkt-Protokoll (PPP). Beim Aufbau einer Verbindung findet eine Authentisierung des Teilnehmers bzw. der Verbindungs-aufbauenden Teilnehmer-Station statt, was u.a. Grundlage für eine zentrale Abrechnung von anfallenden Gebühren sein kann. Zu Zwecken der Authentisierung ist das RADIUS-Protokoll (RADIUS: Remote Authentication Dial In User Service) bekannt.

Bieten derartige Kommunikationssysteme den Teilnehmerstationen, z.B. einem Computer bzw. Host, einen Netzzugang für Datenübertragung, z.B. für Internetdienste, an, so erfolgt bei der Installation einer Teilnehmerstation eine Konfiguration, bei der in der Teilnehmerstation alle für den Datenzugang notwendigen Einstellungen, insbesondere IP-Adressen (IP: Internet Protokoll) abgespeichert werden. Diese erlauben es der Teilnehmerstation, respektive dem Teilnehmer, unterstützende Dienste, die für den Ablauf des gewünschten Datendienstes, z.B. Internet-Zugang, unumgänglich sind, sowie Netzkomponenten, auf denen diese ablaufen, zu kontaktieren. Zu diesen Adressen gehören neben z.B. der IP-Adresse eines HTTP-Servers, der den bequemen Aufruf einer Internetseite "per Mausklick" ten, auf denen diese ablaufen, zu kontaktieren. Zu diesen Adressen gehören neben z.B. der IP-Adresse eines HTTP-Servers, der den bequemen Aufruf einer Internetseite "per Mausklick" ermöglicht, u.a. die Adresse eines DNS (Domain Name Server), welcher die zu einer an das Netz angeschlossenen Einheit (Diensteserver; Teilnehmerstation) gehörende IP-Adresse ermittelt, sowie die Adresse eines SMTP-Servers (Simple Mail Transfer Protocol), welcher zur Übermittlung elektronischer Nachrichten, bekannt als eMail, notwendig ist.

Neben den vorstehend aufgeführten Kommunikationssystemen gibt es Datennetze, die in der Regel lokal aufgebaut sind und zur allgemeinen Verbindung von Datenstationen konzipiert sind, die nachfolgend lediglich zur Unterscheidung von den vorstehend bezeichneten Teilnehmerstationen und ohne Beschränkungen als Host bezeichnet werden. Zwei Host-Rechner können direkt oder über Hubs und Brücken miteinander und mit Netzeinrichtungen, wie einem Zugriffsserver verbunden sein. Der Transport von Datenpaketen zwischen einem Host und einer anderen Netzeinrichtung erfolgt zumeist über IP (Internet-Protokoll).

Beim Anschluß eines Host an ein Netz, beispielsweise ein lokales Datennetz (LAN), wird dem Host von einem Verbindungs- bzw. Zugriffsserver mittels z.B. des sogenannten dynamischen Host-Konfigurierungs-Protokolls (DHCP) eine IP-Adresse vergeben, unter welcher der Host im Netz eindeutig identifizierbar und ansprechbar ist. Außerdem werden dem Host dabei Adressen von für ihn wichtigen Hilfsdiensten bzw. von Netzkomponenten, auf denen diese Dienste ausgeführt werden, in diesem Netz mitgeteilt.

Ein Host ist üblicherweise drahtgebunden an ein lokales Netz angeschlossen, wobei das letzte Teilstück eines drahtbasierten Zugangs in neueren Netzen drahtlos über Funk erfolgen kann. Ein lokales Netz, das den drahtlosen Anschluß von Hosts unterstützt, wird allgemein als W-LAN (Wireless Local Area Network) bezeichnet.

Einer Teilnehmerstation eines Tele-Kommunikationssystems müssen bei der Installation für einen IP-Zugang die für einen Verbindungsaufbau erforderlichen IP-Adressen im voraus vor einem ersten Anschluss bzw. Verbindungsaufbau mit einer entsprechenden Netz-Schnittstelle über eine Software-Installation mitgeteilt werden. Dahingegen kann bei einem lokalen Datennetz die Zuweisung aller erforderlichen IP-Adressen direkt automatisch bei jeder neuen Verbindung eines Host mit einem Datennetz erfolgen. Eine Teilnehmerstation und ein Host sind somit keine zu der anderen Netztechnologie kompatible Einrichtungen.

Eine weitere beispielhafte Inkompatibilität zeigt sich z.B. in der Art des Verbindungsaufbaus. Einerseits wird zwischen Teilnehmerstationen und den in Tele-Kommunikationssystemen befindlichen netzseitigen Datenendeinrichtungen, bekannt als RAS (Remote Access Server), ein Punkt-zu-Punkt-Verbindungs-Protokoll (PPP bzw. Point-to-Point-Protocol) verwendet, welches zwischen den eigentlichen, netzspezifischen Transport-Protokollschichten und dem IP zur Verbindungssteuerung eingesetzt wird. Andererseits ist dahingegen in lokalen Netzen, bekannt u.a. als LAN (Local Area Network), diese zusätzliche Verbindungssteuerung nicht erforderlich, so dass Datenpakete, sogenannte IP-Pakete, direkt auf der zugrundeliegenden Transportschicht übermittelt werden können. Die Transportschicht wird vorteilhafterweise durch Ethernet bereitgestellt.

In der EP 0 999 672 A2 wird ein System beschrieben, in dem Mobilstationen über ein Funkzugangsnetz (RAN: radio access network) und einen an das Funkzugangsnetz angeschlossenen Paketdatenverarbeitungsknoten (PDSN: packet data serving node) Zugang zu einem Daten/IP-Netz, beispielsweise dem globalen Internet, erhalten. Hierzu wird sowohl in der Mobilstation wie im Paketdatenverarbeitungsknoten ein PPP/HDLC (point-topoint protocol/high level data link control) Protokoll verwendet.

In der WO 99/66400 A2 wird ein AAA Server (Authentication, Authorization and Accounting Server) beschrieben, der durch eine Vielzahl von Transport Protocol Modulen verschiedenen Nutzern den Zugriff auf ein Computernetz ermöglicht. Die Authentisierung, Autorisierung und Vergebührung erfolgt für alle Nutzer anhand einer an den AAA Server angeschlossenen Datenbank, in der die entsprechenden Nutzerdaten abgelegt sind.

In der US 5 796 727 A wird ein Verfahren beschrieben, das mobilen, mit Modems ausgestatteten Computern über ein zellulares Telefonsystem den Zugriff auf verschiedene Datenkommunikationsdienste und die Teilnahme an LANs (Local Area Networks) ermöglicht.
In der EP 999 672 wird ein Verfaren beschrieben, in dem alle Daten der zweiten Schicht vom Mobilendgerät zum Datennetz weitergeleitet werden. In diesem Dokument wurde also Stand der Technik beschrieben, daß PPP-Verbindungen sich in Funknetz selbst terminieren und IP-Adressen durch Simple IP angefordert werden.

Die derzeit verfügbaren Datennetz-Technologien ermöglichen es einem Teilnehmer, sich mit seinem Notebook mit einer Funk-Datennetzkarte z.B. an einem Flughafen in ein dort zugreifbares fremdes Datennetz mit einer Funkschnittstelle einzubuchen.
Dies ist möglich, da bei offen konzipierten Datennetzen keine Authorisierungs-Überprüfung durchgeführt wird. Der Netzbetreiber kann jedoch nur mit großem programmiertechnischen Aufwand verhindern, dass der fremde Teilnehmer auf bestimmte Dateien oder Programme im Datennetz zugreifen kann. Die Programmierung muss dabei in verschiedenen Einrichtungen des Datennetzes und in den verschiedenen vor fremden Zugriffen zu schützenden Hosts erfolgen. Ein Schutz ist insbesondere dann nur bedingt möglich, wenn dem Host oder dem Teilnehmer Netzinterne IP-Adressen bekannt sind.

Die Aufgabe der Erfindung besteht darin, die verschiedenen Systeme, insbesondere ein Telekommunikationssystem und ein lokales Datennetz, derart zueinander kompatibel zu machen, dass Zugriffe einer Station eines ersten Systems auf Stationen eines zweiten Systems fremder Technologie mit minimalem baulichen und/oder programmiertechnischem Aufwand möglich sind.

Diese Aufgabe wird durch ein Verfahren mit den Merkmalen des Patentanspruchs 1 bzw. ein Datennetz oder eine Netzeinrichtung gemäß den Merkmalen der Patentansprüche 10 bzw. 13 gelöst.

Vorteilhafte Ausgestaltungen sind Gegenstand von abhängigen Patentansprüchen.

Üblicherweise wird bei dem Verfahren zum Anschluß zumindest einer Station, insbesondere eines Datenendgeräts, an ein Datennetz, das zumindest eine Netzeinrichtung zum Weiterleiten von Daten einer Kommunikationsverbindung und Basisfunktionen für einen autonomen Betrieb des Datennetzes aufweist, über eine Zugangseinrichtung mit einer Schnittstelle zum Aufbau einer Kommunikationsverbindung mit der Station die Kommunikationsverbindung zwischen der Zugangseinrichtung, die zweckmäßigerweise eine Netzeinrichtung darstellt, und zumindest einer der weiteren Netzeinrichtungen nicht-verbindungsorientiert (connectionless) über ein gemeinsam genutztes Medium (shared medium) eingerichtet. Erfindungsgemäß wird bei dem Verfahren für die Kommunikationsverbindung zwischen der Zugangseinrichtung und der Station eine logische Punkt-zu-Punkt-Datenverbindung aufgebaut und aufrecht erhalten. Dies ermöglicht den Anschluss von Stationen einer fremden Technologie für Punkt-zu-Punkt-Verbindungen an ein herkömmliches Datennetz, wobei Modifikationen in nur einer Station vorzunehmen sind.

Dass die Zugangseinrichtung zumindest zeitweise Dienstekonfigurations-Client-Funktionen einer Datenendeinrichtung und dass die Zugangseinrichtung zumindest zeitweise Dienstekonfigurations-Server-Funktionen (RAS) des Datennetzes übernimmt, ist besonders zweckmäßig, da solche Funktionen von netzüblichen Stationen bzw. entsprechenden Netzeinrichtungen bereitgestellt wird und für den Aufbau einer Kommunikationsverbindung angefordert wird.

Dass die Zugangseinrichtung die Zuordnung einer temporären Identifikationsadresse (IP-Adresse) der Station mittels Dienstekonfigurations-Client-Funktionen (DHCP) einer im Datennetz nicht-verbindungsorientiert anschließbaren Station, insbesondere Datenendeinrichtung, vom Datennetz anfordert und/oder mit Hilfe von Dienstekonfigurations-Server-Funktionen des Datennetzes der Station zuweist, ermöglicht vorteilhafterweise eine für Datennetze übliche und erforderliche Adresszuweisung.

Dass die Zugangseinrichtung die über die Kommunikationsverbindung auszutauschenden Daten mit der Station in einem einer Punkt-zu-Punkt-Verbindung üblichen Übertragungsrahmen (PPP) austauscht und diese Daten in einen in der nicht-verbindungsorientierten (connectionless) netzinternen Verbindung entsprechenden Übertragungsrahmen (Ethernet) umsetzt bzw. umgekehrt, ermöglicht eine einfache Umsetzung verschiedener Übertragungsformate in einer einzigen Station. Modifikationen in weiteren Stationen, insbesondere den Stationen, sind folglich nicht erforderlich. Dies gilt insbesondere, falls die Zugangseinrichtung die Konvertierung eines PPP-Übertragungsrahmens in einen Ethernet-Übertragungsrahmen und/oder umgekehrt veranlasst oder durchführt.

Dass zwischen der Station und der Zugangseinrichtung ein PP-Protokoll (Point-to-Point-Protocol) eines zellularen Tele-Kommunikationsnetzes verwendet wird, ermöglicht den Anschluss von Stationen der andersartig aufgebauten Punkt-zu-Punkt-Technologie an ein herkömmliches Datennetz.

Dass die Zugangseinrichtung eine IP-Adresse, insbesondere mittels einer DHCP-Client-Funktion, vom Datennetz anfordert und diese mittels PP-Protokoll an die Station weitergibt, läßt diese gegenüber dem Datennetz eine übliche Datennetz-Endeinrichtung erscheinen.

Dieses Verfahren ist für eine Vielzahl an Standards einsetzbar. Zwischen der Zugangseinrichtung und der Station können verschiedene Luftschnittstellen-Protokolle oder -Standards verwendet werden, insbesondere der Bluetooth-Standard, der DECT-Standard, der HomeRF-Standard, der IEEE 802.11-Standard, der IEEE 802.11b-Standard, der IEEE 802.11a-Standard, der HiperLAN-Standard, der HiperLAN2-Standard, der GSM-Standard oder der UMTS-Standard.

Dass eine DHCP-Client-Funktion der Zugangseinrichtung nach erfolgreicher Zuweisung einer IP-Adresse an die Station von der Zugangseinrichtung zugunsten der DHCP-Clientfunktion der Station aufgegeben wird und die weitere Dienste-Konfiguration von der Station über DHCP-Client-Funktionen der Station und von der DHCP-Server-Funktion des Datennetzes durchgeführt wird, erspart Ressourcen der Zugangseinrichtung und insbesondere auch des Datennetzes.

Entsprechend der Erfindung werden ein Datennetz, insbesondere ein lokales Datennetz gemäß z.B. dem Ethernet-Standard, und eine Zugangseinrichtung dafür vorgeschlagen, die ein solches Verfahren durchführen können.

Vorteilhafterweise ist die Zugangseinrichtung stationsseitig als Funk-Basisstation und netzseitig als Netzeinrichtung, insbesondere Brücke oder Hub, ausgebildet. Die Station kann dabei drahtgebunden oder drahtlos an die Zugangseinrichtung bzw. das Datennetz angekoppelt sein.

Durch einen derartigen Aufbau können somit Stationen des einen Systems mit Stationen des anderen Systems mit nur minimalem baulichen und/oder programmiertechnischen Aufwand miteinander kommunizieren. Die verschiedenen Technologien können so kombiniert werden, dass jeweils deren vorteilhafte Eigenschaften von Einrichtungen anderer Technologien ausgenutzt werden können. Insbesondere können z.B. Authentisierungs- und Autorisierungs-Funktionen aus einem zellularen Funk-Tele-Kommunikationsnetz für ein Datennetz verfügbar gemacht werden, so dass z.B. eine Authentisierung und eine Autorisierung eines im Datennetz fremden Teilnehmers möglich werden.

Insbesondere können erforderliche Anpassungen in System- bzw. Netzstationen vorgenommen werden, so dass an den Endstationen, also den Teilnehmerstationen bzw. Hosts, welche die Massengüter eines Kommunikations- oder Datennetzes sind, keine Veränderungen vorzunehmen sind.

Im Idealfall entsteht somit eine generische Gesamt-Architektur, welche die beste Breite an Vorteilen verschiedenster Technologien bietet. Es handelt sich somit nicht nur um eine einfache Weiterentwicklung einer einzelnen Technologie, sondern um ein einzigartiges Gesamtkonzept, das problemlos erweiterbar ist. Die Gesamt-Architektur weist insbesondere die Vorteile auf,
- dass sie einen einfachen, leichten Zugriff und die Autokonfigurierbarkeit eines lokalen Daten-Netzes (LAN) bietet,
- dass sie PP-Protokoll- und DHC-Protokoll-Zugriffs-Philosophien kombiniert bzw. verwendet,
- dass sie die geeignetste Mobilitäts-Funktionalität für einen mobilen Datenzugriff ermöglicht,
- dass sie Datenzugriff für Dienste mit hohem Bandbreitenbedarf (best effort services) bietet,
- dass sie eine hohe Sicherheit gewährleistet,
- dass sie den Anschluss an zellulare Netze, insbesondere Funk-Tele-Kommunikationssysteme bietet,
- dass sie sehr kostengünstig umsetzbar ist,
- dass sie mit minimalem, plattform-unspezifischem Programmieraufwand alle denkbaren Host-Plattformen (PC/Laptop/Palm®Top/Windows®/Linux®/OS2®/MAC OS®, ...) unterstützt,
- dass sie standardisierte Transport- und Zugriffstechnologien vorsieht.

Ausführungsbeispiele werden nachfolgend anhand der Zeichnung näher erläutert. Es zeigen:
- Fig. 1: einen schematischen Aufbau für einen typischen Anschluß eines Telekommunikationsnetz-Teilnehmers an das Internet, und zwar über eine Einwahlverbindung mittels Modem mit einem tabellarischen Überblick über Protokollfunktionen einzelner Einrichtungen in der unteren Figurenhälfte,
- Fig. 2: einen schematischen Aufbau eines lokalen Netzes mit einem tabellarischen Überblick über Protokoll-Funktionen einzelner Einrichtungen,
- Fig. 3: eine erste beispielhafte Ausführungsform eines PPP-Zugangs an einem lokalen Netz,
- Fig. 4: ein vorteilhaftes Ausführungsbeispiel zur Integration Punkt-zu-Punkt-orientierter Teilnehmerzugänge an ein lokals Netz und
- Fig. 5: eine beispielhafte Konvertierung einer Daten-Rahmenstruktur zum Anschluß einer Punkt-zu-Punkt-orientierter Funktechnologie.

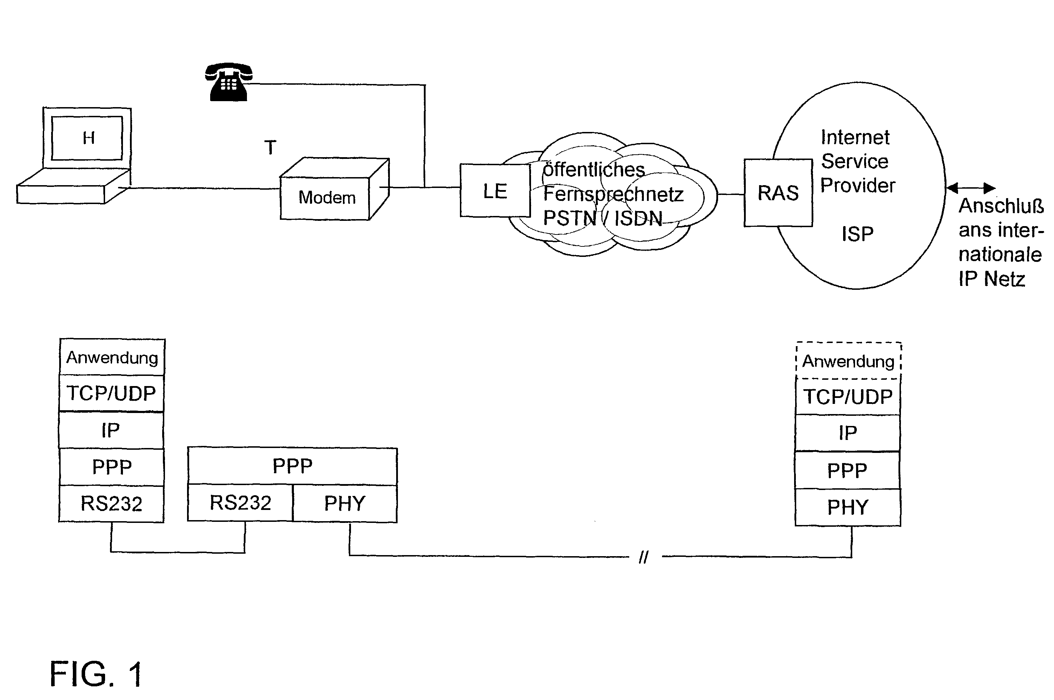

Wie aus Fig. 1 ersichtlich, weist ein Tele-Kommunikationssystem bzw. -netz vorzugsweise drahtgebundene Teilnehmereinrichtungen, beispielsweise Telefone T und über eine Modemeinrichtung angeschlossene Computer bzw. Host H auf. Das Tele-Kommunikationssystem kann beispielsweise ein diensteintegrierendes digitales Nachrichtennetz ISDN (Integrated Services Digital Network), ein herkömmliches öffentliches Fernsprechnetz PSTN (Public Switched Telephone Network) oder ein digitales xDSL-System (DSL: Digital Subscriber Line) sein. Die Verbindung der einzelnen Teilnehmereinrichtungen T bzw. H mit den Netzeinrichtungen erfolgt über lokale Ortsämter LE (Local Exchange).

Insbesondere für den Anschluß von Hosts an ein Datennetz über ein Transportnetz (ISDN) weist das Tele-Kommunikationssystem PSTN/ISDN einen Server für einen entfernten Datenzugriff auf, der nachfolgend als Fernzugriffs-Server RAS (Remote Access Server) bezeichnet wird. Der Fernzugriffs-Server RAS ist bei den derzeitigen Systemen für den Aufbau von Verbindungen zu den Teilnehmer-Datenendeinrichtungen, insbesondere Hosts H, erforderlich und arbeitet mit einem Punkt-zu-Punkt-Protokoll PPP, welches üblicherweise den Anforderungen an das Internet-Protokoll IP genügt. Die Authentisierung einer Teilnehmerstation erfolgt üblicherweise über den als RADIUS (Remote Authentication Dial In User Service) bezeichneten Dienst. Außerdem weist der Fernzugriffs-Server RAS in der Regel Modembänke für den netzseitigen und teilnehmerseitigen Datentransport und Router für die Verbindung zum IP-basierten Internet, bekannt als IP backbone, auf.

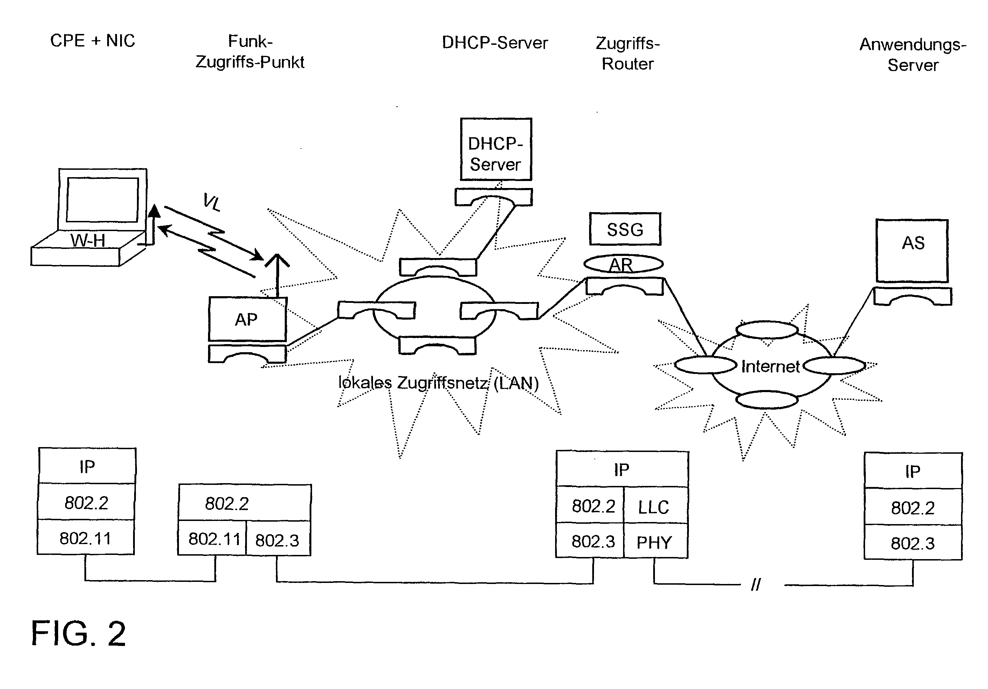

Wie aus Fig. 2 ersichtlich, weist ein lokales Datennetz LAN, z.B. ein lokales Funknetz WLAN, Stationen auf, die nachfolgend als Host H bezeichnet werden. Ein typisches Beispiel für ein solches Datennetz LAN ist ein firmeninternes Ethernet. Darin stehen die einzelnen Stationen bzw. Hosts H direkt untereinander oder über Brücken (Bridge) und Hubs miteinander in Verbindung. Ein Hub kann dabei im wesentlichen als eine Verteilereinrichtung angesehen werden, an der mehrere Datenendstationen H zugleich angeschlossen werden können und dann alle Daten zugeleitet bekommen. Eine Brücke ist im wesentlichen einem Hub vergleichbar, bietet aber darüber hinaus eine Möglichkeit einer Segmentierung bzw. Verteilung der hindurchlaufenden Daten.

Neben fest verdrahteten Verbindungen in einem Datennetz LAN gibt es in Funk-Datennetzen WLAN (Wired Lokal Area Network) auch Verbindungen über Funkschnittstellen VL. Für solche Funkverbindungen kann u.a. das sogenannte Bluetooth-Funk-Zugriffsprotokoll (Bluetooth radio AP) verwendet werden. Dabei handelt es sich um ein Protokoll, das eine Punkt-zu-Punkt-Verbindung zwischen zwei gerade miteinander kommunizierenden Einrichtungen unterstützt. Es ist somit wesentlich einfacher aufgebaut, als die Protokolle, die bei zellularen Funksystemen verwendet werden.

Hauptsächlich findet in solchen Systemen eine Luftschnittstelle basierend auf dem IEEE 802.11 Standard Anwendung.

Ein solches Datennetz (W-)LAN kann auch einen oder mehrere Diensteserver aufweisen, insbesondere mit nachfolgend beschriebenen logischen Einrichtungen, z.B. einem Domain-Namen-Server DNS. Diese Einrichtungen können zum Teil aber auch in anderen oder eigenständigen Einrichtungen aufgenommen sein, wobei sie als Klienten- bzw. Serverteil (client part / server part) aufgeteilt und/oder eingerichtet werden können.

Ein HTTP-Server erlaubt dem Teilnehmer "per Mausklick" auf von ihm ausgewählte Internet-Seiten zuzugreifen, ohne die spezifischen IP-Adressen der jeweiligen Anbieter kennen zu müssen.

Mittels eines Dynamischen Host-Konfigurierungs-Protokolls DHCP bzw. eines sogenannten DHCP-Servers wird beim Anschluß eines Host H an das Datennetz (W-)LAN eine Adresse, insbesondere IP-Adresse, vergeben, unter welcher der neu hinzugekommene Host H im Netz eindeutig identifizierbar und ansprechbar ist. Zumeist erfolgt die Adressvergabe variabel, so dass der international für alle Hosts H nur begrenzt verfügbare Adressraum nicht erschöpft. Vorteilhafterweise kann der DHCP-Server IP-Adressen zeitlich limitiert vergeben, so dass ein Host H nach Ablauf einer festgelegten Zeit eine neue IP-Adresse anfordern muss.

Ferner kann der Zugriffs-Server AS einen Authentisierungs- und Autorisierungs-Server (AA-Server) aufweisen, der optional als Accounting-Server (AAA-Server) auch eine zentrale Abrechnung von anfallenden Gebühren ermöglichen kann (AAA-Server).

Weitere Servereinrichtungen können dem Anschluss an Netze wie das Internet dienen, beispielsweise sogenannte POP3-Server und/oder SMTP-Server (SMPT: Simple Mail Transfer Protocol), die zum Austausch von elektronischen Briefen (eMails) dienen.

Bei den nachfolgend näher erläuterten Ausführungsbeispielen wird jeweils eine einfache Modifikation und/oder Ergänzung an vorzugsweise jeweils nur einer einzelnen Netzeinrichtung SSG in einem der Systeme, d.h. im eigentlichen Datennetz (W-)LAN und/oder im eigentlichen Tele-Kommunikationsnetz, z.B. GSM/UMTS, vorgenommen, so dass insbesondere technisch bauliche Änderungen an den Teilnehmerstationen bzw. Datenendgeräten H der jeweiligen Netze vermeidbar sind.

Im Idealfall reicht die Einführung einer nachfolgend als Diensteauswahl-Überleiteinrichtung bzw. Diensteauswahl-Gateway SSG (Service Selection Gateway) bezeichneten Einrichtung in einem Datennetz (W-)LAN, wobei zur Steuerung erforderlicher Funktionen das für sich bekannte einfache Netzmanagement-Protokoll SNMP (Simple Network Management Protocol) einsetzbar ist. Teils weisen aber auch einzelne nachfolgend beschriebene Einrichtungen Komponenten/Funktionen eines Diensteauswahl-Gateways SSG auf.

So kann ein handelsüblicher Standard-Host W-H mit einer Zentralverarbeitungseinrichtung CPE und einer Netzschnittstellenkarte NIC (Net Interface Card) weiterhin über eine Funkschnittstelle VL mit einer handelsüblichen Funkverbindungen unterstützenden Brücke kommunizieren. Dabei können bestehende Protokolle für einen DHCP-Zugriff verwendet werden, z.B. 802.11 oder ein HiperLAN-Funk-Zugriffs-Protokoll. Die Brücke bildet in üblicher Art und Weise die Schnittstelle zwischen z.B. den Protokollen für Datennetz-Funkschnittstellen (802.11) und Datennetz-Kabelschnittstellen (802.3).

In dem System können außerdem herkömmliche Funkstationen eingesetzt werden, die als alternative Funktechnologie Punkt-zu-Punkt-Verbindungen mit anderen Einrichtungen, z.B. einer Datenendeinrichtung H mit einer Funkschnittstelle, unterstützen. Ein diesbezüglich übliches Standardprotokoll ist dafür das sogenannte Bluetooth-Funkzugriffs-Protokoll.

Ein solches lokales Funk-Zugangsnetz (W-)LAN kann Teilnehmern schnurlosen Datenzugang z.B. zur Nutzung von Internet-Diensten ermöglichen. Im Falle eines unauthentisierten, nicht vergebührten Teilnehmerzuganges reicht es aus, eine Anordnung gemäß Fig. 2 bereitzustellen.

Im Falle einer für den Funkzugang verwendeten Punkt-zu-Punkt-Verbindung werden im Netz vorteilhafterweise einer oder mehrere Server AS (Access Server) bereitgestellt, die die logische Punkt-zu-Punkt-Verbindung netzseitig terminieren. Letztere können z.B. in den Diensteauswahlserver SSG integriert sein.

Eine drahtlos an ein lokales Netz (W)-LAN angebundene Teilnehmer-Endeinrichtung W-H kann über eine Luftschnittstelle VL (IEEE 802.11) einen Funk-Zugriffspunkt AP (Access Point) kontaktieren, welcher vorteilhafterweise netztopologisch als Brücke (LAN-bridge) realisiert ist. Die für diese Datensitzung (session) benötigte temporäre Zugriffsidentität, z.B. einer IP-Adresse, wird dynamisch von einem DHCP-Server zugewiesen. Der DHCP-Server konfiguriert in der Teilnehmer-Endeinrichtung W-H u.a. auch die Adresse, z.B. IP-Adresse, eines Zugangsrouters AR (Access Router) zum IP-Transportnetz. Fig. 2 zeigt zudem ein Beispiel der üblicherweise verwendeten Protokollschichten, im Beispiel basierend auf dem wohlbekannten IEEE 802.11 Standard.

Mit anderen Worten, ein Teilnehmer greift gemäß oben beschriebenem Verfahren auf einen Funk-Zugriffspunkt AP schnurlos zu und bekommt daraufhin eine temporäre Identität, z.B. eine IP-Adresse, von einem DHCP-Server zugewiesen. Üblicherweise nutzen Teilnehmer für einen Netzzugriff eine spezielle Internet- bzw. Netz-Zugangssoftware, die als Browser bezeichnet wird, und wählen "per Mausklick" oder manueller Eingabe über eine Tastatur eine Internetseite, die durch eine universelle Datenquellenangabe in Textform (URL: Universal Ressource Locator) referenziert wird. Die Netzzugangssoftware ist in der Lage einen bestimmten Dienste- bzw. Diensteauswahl-Server SSG, insbesondere HTTP-Server, dessen IP-Adresse dem Teilnehmerendgerät W-H vom DHCP-Server mitgeteilt wurde, anzuwählen bzw. zu adressieren. Die Adresse des Dienste-Servers SSG ist vorteilhafterweise gleichbedeutend mit der IP-Adresse des Diensteauswahl-Servers SSG. Dieser HTTP-Server ist in der Lage, die gewünschte Datenquellenangabe (URL) auszuwerten und die vom Teilnehmern gewünschte Internetseite darzustellen. Gleichfalls kann der Diensteauswahl-Server SSG selbst Internet-Seiten generieren und auf der Teilnehmer-Endeinrichtung zur Darstellung bringen.

Die meisten lokalen Netze, die einem Host eine Anschlußmöglichkeit bieten, basieren derzeit auf der bekannten Ethernet Technologie. Fig. 2 zeigt die wichtigsten Protokolleigenschaften in tabellarischer Form für die Verbindungsschicht (basierend auf dem bekannten IEEE 802.2 Standard), sowie die physikalischen Transportschichten für den drahtgebundenen, terrestrischen Transport (IEEE 802.3) bzw. den schnurlosen Transport über eine Luftschnittstelle (IEEE 802.11).

Das technologisch herausragenste Merkmal der Ethernet-Technologie ist die Benutzung des Übertragungsmediums (Luft oder Draht) als "gemeinsam genutztes Medium" (shared medium). Dies bedeutet, dass - im Gegensatz zu leitungsvermittelten Verbindungen - allen Nutzern (Hosts), die an einer Übertragungsstrecke, z.B. Kabel (Yellow Cable), angeschlossen sind, die gesamte Übertragungskapazität (z.B. 10 Megabit pro Sekunde) zur Verfügung steht. Im Falle einer geringen Gesamt- Teilnehmeraktivität kann somit ein einzelner Teilnehmer - für eine gewisse Zeit - eine wesentlich höhere Datenübertragungsrate in Anspruch nehmen als bei einer hohen Gesamt-Teilnehmeraktivität. Im Falle leitungsvermittelter Verbindungen steht einem Teilnehmer oftmals eine statische Übertragungsrate (z.B. 64 Kilobit pro Sekunde, ISDN) zur Verfügung, unabhängig von der Aktivität eines Nutzers bzw. Hosts.

Gemeinsam genutzte Übertragungsmedien (shared media) eignen sich somit wesentlich besser zum Transport von paketvermittelten Daten, insbesondere IP Daten, da sie den den Bedürfnissen eines Internet-Dienste-Nutzers an die Übertragungsbandbreite (best effort) am ehesten gerecht werden. Dieses herausragende technische Merkmal führte zu einer weltweiten Verbreitung der Ethernet-Technologie, so dass heute praktisch alle lokalen Datenetze (LAN) auf diesem Verfahren und der entsprechenden Topologie basieren.

Der funkbasierte Datenzugang für lokale Netze ((W)LAN) ist, im Falle des bekannten IEEE 802.11-Standards, eine logische Erweiterung, um die ehemals drahtbasierte Transporttechnologie auch für das Medium Luft nutzbar zu machen (shared medium).

Im Gegensatz zu der speziell für den drahtlosen LAN-Zugang konzipierten Luftschnittstelle IEEE 802.11, bzw. 802.11b oder 802.11a, sind weitere Funkttechnologien, die sich für Datentransport eignen, weit verbreitet. So ist, hauptsächlich im europäischen Bereich, der DECT-Luftschnittstellenstandard verbreitet und die Bluetooth Technologie steht kurz vor ihrer internationalen Markteinführung.

Einerseits sind diese Funktechnologien - oftmals aufgrund ihrer anderweitigen Nutzbarkeit (z.B. für Sprache) - nicht optimiert für den Anschluß an lokale Datenetze (LAN), andererseits bieten sie aufgrund ihres Verbreitungsgrades ein hohes Nutzpotential.

Der Einsatz derartiger Technologien besteht derzeit darin, dass sie oftmals als schnurloser Datenzugang zu leitungsvermittelnden Netzen, z.B. als schnurlose Verlängerung der seriellen Rechnerschnittstelle zum Modem (DECT), verwendet werden, oder dass sie bevorzugt zur Datenübertragung auf einer Punkt-zu-Punkt-Verbindung, z.B. zur Übertragung von Sprache zwischen einem Mikrophon und einem Mobilfunk-Endgerät (Bluetooth) verwendet werden.

Deshalb ist oftmals die Benutzung einer PPP-Protokollschicht (Point-to-Point-Protocol) erforderlich, welche zwischen der eigentlichen Transportschicht und der IP-Schicht verwendet wird. Diese erlaubt z.B. den Verbindungsauf- und Abbau leitungsvermittelter Verbindungen. Weitere Aufgaben dieser Protokollschicht bestehen in der Zuteilung einer verbindungsorientierten IP Adresse an den Host, sowie dem Transport Authentisierungs-relevanter Informationen.

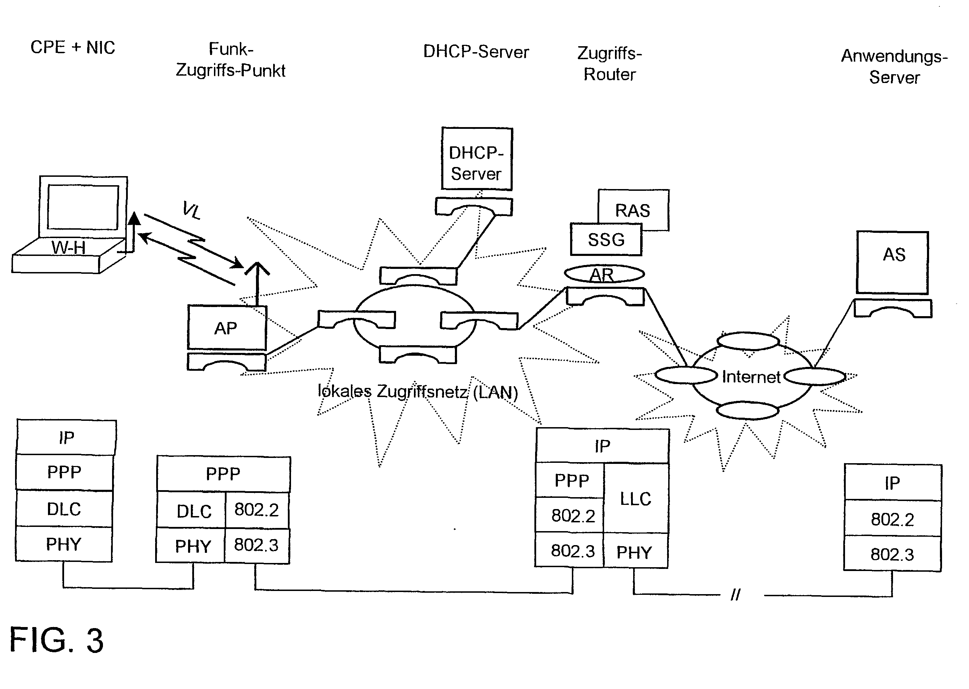

Netzseitig muss die PPP-Protokollschicht terminiert werden, da das Internationale IP-Netz (IP-Backbone) auf IP-Routing basiert und nicht transparent für den Transport von PPP Rahmen ist. Diese Terminierung erfolgt z.B. in einem Remote Access Server (RAS) eines Internet Service Providers (ISP) (siehe Fig. 1). Im Falle eines W-LAN Anschlusses kann eine solche Terminierung, wie in Fig. 3 dargestellt, z.B. in einem Diensteauswahl-Servers SSG erfolgen. Fig. 3 stellt dabei eine erste Auführungsform dar.

Im Gegensatz zum generischen LAN-Zugriff, der, wie oben beschrieben, die Autokonfiguration von Rechnern (Hosts) über das dynamische Host-Konfigurierungs-Protokoll DHCP ermöglicht, kann das PPP-Protokoll nicht dazu verwendet werden, Autokonfigurationsparameter, wie IP-Adressen wichtiger Dienste, zu übermitteln. Diese müssen ggf. manuell, z.B. bei der Installation eines Internetzugangs über das Telefonnetz, konfiguriert werden. Somit können viele wichtige Dienste (z.B. elektronische Mail, Domain Name Server DNS) für mobile Teilnehmer, die sich zwischen Internet-Domänen (Domains) bewegen, heute nicht automatische geändert werden, ohne dass massive proprietäre Änderungen am Teilnehmerendgerät (Host) vorgenommen werden.

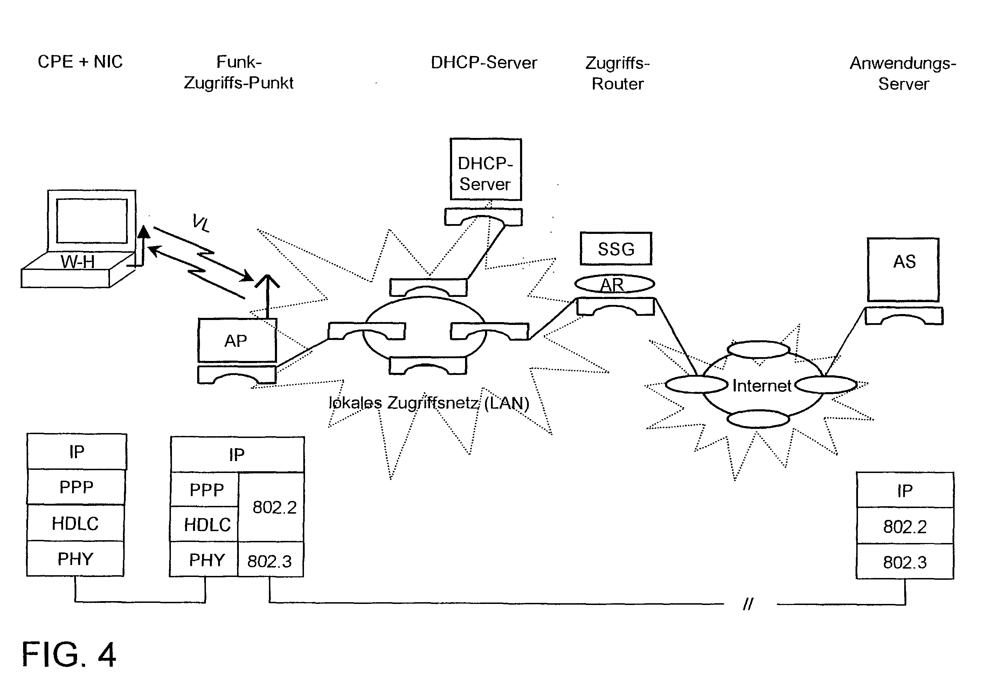

Insbesondere mit der nachfolgend anhand Fig. 4 beschriebenen Ausführungsform werden zwei der Probleme beim Anschluß Punktzu-Punkt (PPP) orientierter Luftschnittstellen an ein lokales Datennetz LAN gelöst. Bei dieser Ausführungsform ist es nicht mehr zwingend so, dass
- das Datennetz über eine Instanz verfügen (RAS) muss, die das Abhandeln der PPP-Protokollschicht ermöglicht, was dazu führt, dass es nun nicht mehr zwei Klassen von Teilnehmern in einem solchen Netz gibt, nämlich solche mit PPP-Anschluß und generische LAN-Teilnehmer, die administrativ unterschiedlich behandelt werden mussten, und dass
- viele wichtige Netzdienste nicht autokonfiguriert werden können, was eine Nutzung, z.B. für mobilen Zugang zu Internetdiensten, erschwerte bzw. sogar unmöglich machte.

Ein hervorzuhebendes Merkmal besteht dazu in dem Verfahren, dass Punkt-zu-Punkt orientierte Luftschnittstellen als drahtloser Zugang zu lokalen Datennetzen (LAN) nutzbar gemacht werden, ohne dabei spezielle Diensteserver, insbesondere Fernzugriffsserver (RAS), zur diesbezüglichen Unterstützung im lokalen Datennetz notwendig zu machen, und zwar unter Beibehaltung der im LAN üblichen Autokonfigurabilität der über diese Schnittstellen angeschlossenen Rechnervorrichtungen (W-H, DHCP).

Fig. 4 zeigt eine diesbezüglich vorteilhafte Ausgestaltung einer Netzarchitektur. Ein Host W-H ist über eine Luftschnittstelle VL an einen Funk-Zugangspunkt AP eines lokalen Zugriffsnetzes LAN angeschlossen. Dabei terminiert der Funk-Zugangspunkt AP, welcher bezüglich seines Anschlusses an das lokale Netz LAN als Brücke (bridge) realisiert sein kann, und bezüglich der logischen Verbindungssteuerung über die Luftschnittstelle das PP-Protokoll. Hierbei kann das für serielle Datenübertragung übliche HDLC- (High-level Data Link Control) Protokoll Verwendung finden.

In Fig. 4 erfolgt der netzseitige Anschluß des Funk-Zugangspunkts AP auf der physikalischen Schicht und der Steuerungsschicht von Ethernet (802.3, 802.2) beruhend. Teilnehmerseitig präsentiert sich der Funk-Zugangspunkt AP als Instanz, die neben der Terminierung der Luftschnittstelle auch die logische Punkt-zu-Punkt-Verbindungssteuerung abhandelt.

Im Teilnehmerdatenendgerät, insbesondere Funk-Host W-H, ist bei einer solchen Art des Anschlusses, welcher auf einer logischen Punkt-zu-Punkt-Verbindung beruht, Applikationssoftware, z.B. ein Internetbrowser, in vielen Dingen so konfiguriert, wie es einer Einwahlverbindung über Modem entspricht: die IP-Adressen wichtiger Netzdienste sind voreingestellt, lediglich die eigene, dem Host für die Dauer einer Verbindung zuweisbare IP-Adresse, kann mittels des PP-Protokolls dynamisch zugewiesen werden.

Im Falle, dass ein Host über eine oben beschriebene Luftschnittstelle mit einem Funk-Zugangspunkt AP eine Verbindung aufbaut, übernimmt der Funk-Zugangspunkt AP die Funktionalität eines DHCP-Clients. Über diesen bekommt ein Host W-H, der über eine Punkt-zu-Punkt Verbindung schnurlos an den Funk-Zugangspunkt AP angeschlossen ist, eine IP Adresse von einem an das lokale Datennetz (LAN) angeschlossenen DHCP Server zugewiesen. Bezüglich dieser Funktion agiert der Funk-Zugangspunkt AP gegenüber dem lokalen Datennetz (LAN) bzw. gegenüber einem an das LAN angeschlossenen DHCP-Server wie ein LAN-Host, der über seine DHCP-Client Funktion eine IP Adresse anfordert. Der DHCP Server sendet umgehend die Zuordnung einer IP-Adresse an den Funk-Zugangspunkt AP. Der Funk-Zugangspunkt AP kann nun über Mechanismen, wie sie dem PP-Protokoll zu eigen sind, die IP-Adresse mittels des PP-Protokols an den Host übermitteln.

Ist dies geschehen, gibt der Funk-Zugangspunkt AP die DHCP-Client-Funktion wieder zugunsten des Hosts W-H auf. Weitere Konfigurationen des Hosts erfolgen nun unter Nutzung der DHCP-Client-Funktion des Hosts W-H.

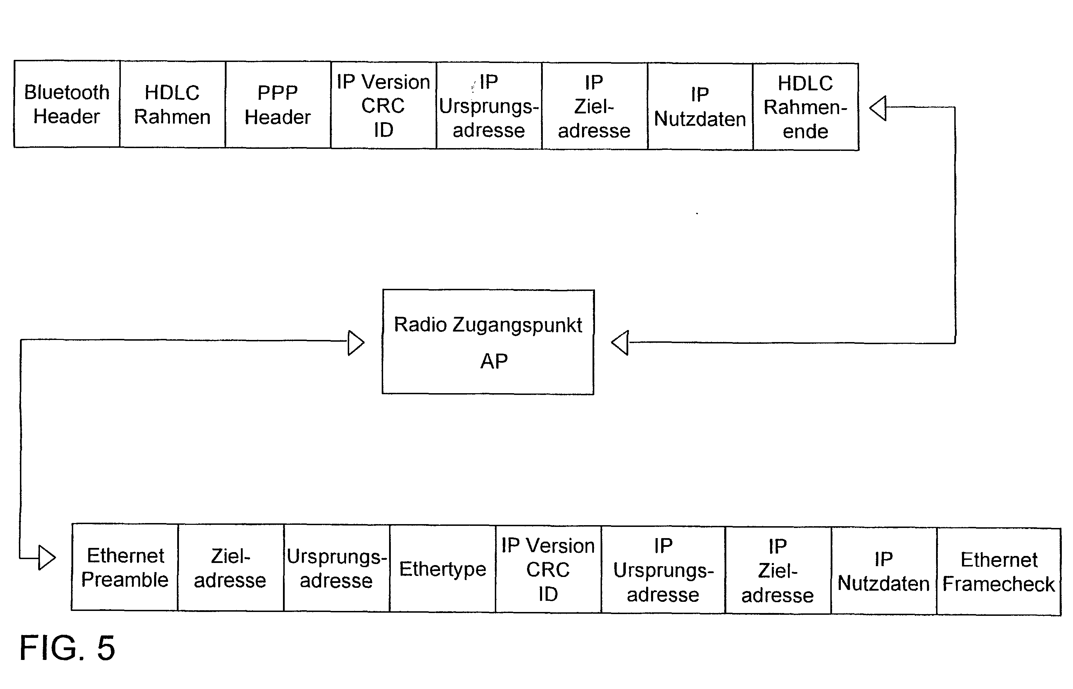

Fig. 5 zeigt, wie hierbei der Funk-Zugangspunkt AP (Access Point) eine Konvertierung der Rahmenstruktur der Daten, die zwischen Host W-H und lokalem Datennetz LAN übermittelt werden, vornimmt.

Hierbei sind teilnehmerseitig die eigentlichen IP-Nutzdaten (IP: Internet-Protokoll) in einen PPP-Rahmen eingebettet, welcher wiederum in einem HDLC-Rahmen (serieller Datentransport) eingebettet sein kann, welcher widerum eingebettet sein kann in den üblichen Übertragungsrahmen der Luftschnittstelle, z.B. Bluetooth. Ein IP-Paket besteht üblicherweise aus Steuerungsinformation wie IP-Versionsnummer, Testsumme (CRC, Cyclic Redundancy Check), einer Sender- und einer Empfängeradresse sowie den eigentlichen Nutzdaten.

Netzseitig ist ein IP-Paket eingebettet in einen Ethernetrahmen, der eine Präambel, eine Testsumme, eine Ziel- und eine Ursprungsadresse, sowie ein Ethertype-Feld aufweist.

Je nach Datenrichtung, Host zum Netz bzw. umgekehrt, nimmt der Funk-Zugangspunkt AP die jeweils notwendige Rahmenkonvertierung vor.

## Patentansprüche

1. Verfahren zum Anschluß zumindest einer Station (H; W-H) an ein Datennetz (LAN), wobei das Datennetz (LAN)
- eine oder mehrere Netzeinrichtungen zum Weiterleiten von Daten von Kommunikationsverbindungen,
- und zumindest eine Zugangseinrichtung (AP) mit einer Schnittstelle (VL) zum Aufbau einer Kommunikationsverbindung mit der zumindest einen Station (W-H) aufweist,
- wobei die Kommunikationsverbindung zwischen der Zugangseinrichtung (AP) und zumindest einer der weiteren Netzeinrichtungen nicht-verbindungsorientiert über ein gemeinsam genutztes Medium erfolgt und für die Kommunikationsverbindung zwischen der Zugangseinrichtung (AP) und der Station (W-H) eine logische Punkt-zu-Punkt-Datenverbindung gemäß einem Punkt-zu-Punkt Protokoll aufgebaut und aufrecht erhalten wird,
**dadurch gekennzeichnet, dass**
die Zugangseinrichtung (AP) für die Station (W-H) die Zuordnung einer temporären Identifikationsadresse durch das Verwenden von Dienstekonfigurations-Client-Funktionen eines im Datennetz nicht-verbindungsorientiert anschließbaren Datenendgeräts (H) vom Datennetz anfordert und durch das Verwenden von Dienstekonfigurations-Server-Funktionen des Datennetzes (LAN; RAS) der Station (W-H) zuweist.

2. Verfahren nach Anspruch 1, bei dem
das Datennetz (LAN) Basisfunktionen für einen autonomen Betrieb des Datennetzes (LAN) aufweist.

3. Verfahren nach einem der Ansprüche 1 bis 2, bei dem die Zugangseinrichtung (AP) die über die Kommunikationsverbindung auszutauschenden Daten mit der Station (W-H) in einem einer Punkt-zu-Punkt-Verbindung üblichen Übertragungsrahmen austauscht und diese Daten in einen in der nicht-verbindungsorientierten netzinternen Verbindung entsprechenden Übertragungsrahmen umsetzt.

4. Verfahren nach einem der Ansprüche 1 bis 3, bei dem als Punkt-zu-Punkt Protokoll zwischen der Station (W-H) und der Zugangseinrichtung (AP) ein Punkt-zu-Punkt Protokoll eines zellularen Tele-Kommunikationsnetzes verwendet wird.

5. Verfahren nach einem der Ansprüche 1 bis 4, bei dem die Zugangseinrichtung (AP) eine IP-Adresse, insbesondere mittels einer DHCP-Client-Funktion, vom Datennetz (LAN) anfordert und diese mittels eines Punkt-zu-Punkt-Protokolls an die Station (W-H) weitergibt.

6. Verfahren nach einem der Ansprüche 1 bis 5, bei dem die Zugangseinrichtung (AP) die Konvertierung eines PPP-Übertragungsrahmens in einen Ethernet-Übertragungsrahmen und/oder umgekehrt veranlasst oder durchführt.

7. Verfahren nach einem der Ansprüche 1 bis 6, bei dem als Punkt-zu-Punkt Protokoll zwischen der Zugangseinrichtung (AP) und der Station (W-H) ein Luftschnittstellen-Protokoll oder -Standard verwendet wird, insbesondere der Bluetooth-Standard, der DECT-Standard, der HomeRF-Standard, der IEEE 802.11-Standard, der IEEE 802.11b-Standard, der IEEE 802.11a-Standard, der HiperLAN-Standard, der HiperLAN2-Standard, der GSM-Standard oder der UMTS-Standard.

8. Verfahren nach einem der Ansprüche 1 bis 7, bei dem eine DHCP-Client-Funktion der Zugangseinrichtung (AP) nach erfolgreicher Zuweisung einer IP-Adresse an die Station (W-H) von der Zugangseinrichtung (AP) zugunsten der DHCP-Client-funktion der Station (W-H) aufgegeben wird und die weitere Dienste-Konfiguration von der Station (W-H) über DHCP-Client-Funktionen der Station (W-H) und von der DHCP-Server-Funktion des Datennetzes (LAN) durchgeführt wird.

9. Datennetz (LAN), wobei das Datennetz (LAN)
- eine oder mehrere Netzeinrichtungen zum Weiterleiten von Daten von Kommunikationsverbindungen
- und zumindest eine Zugangseinrichtung (AP) mit einer Schnittstelle zum Aufbau einer Kommunikationsverbindung mit der zumindest einen Station (W-H) aufweist,
- wobei die Zugangseinrichtung (AP) derart ausgebildet ist, dass die Kommunikationsverbindung zwischen der Zugangseinrichtung und zumindest einer der Netzeinrichtungen (Hub, Bridge) nicht-verbindungsorientiert über ein gemeinsam genutztes Medium erfolgt,
- und dass sie für die Kommunikationsverbindung zwischen der Zugangseinrichtung und der Station (W-H) eine logische Punktzu-Punkt-Schnittstelle gemäß einem Punkt-zu-Punkt Protokoll vorsieht,
**dadurch gekennzeichnet, dass**
die Zugangseinrichtung (AP) derart ausgebildet ist, dass sie für die Station (W-H) die Zuordnung einer temporären Identifikationsadresse durch das Verwenden von Dienstekonfigurations-Client-Funktionen eines im Datennetz nicht-verbindungsorientiert anschließbaren Datenendgeräts (H) vom Datennetz anfordert und durch das Verwenden von Dienstekonfigurations-Server-Funktionen des Datennetzes (LAN; RAS) der Station (W-H) zuweist.

10. Datennetz nach Anspruch 9, wobei das Datennetz ein lokales Datennetz (LAN) ist, insbesondere gemäß dem Ethernet-Standard.

11. Datennetz nach Anspruch 10 oder 9, wobei das Datennetz (LAN) Basisfunktionen für einen autonomen Betrieb des Datennetzes (LAN) aufweist.

12. Zugangseinrichtung (AP) für ein Datennetz (LAN),
wobei das Datennetz (LAN) eine oder mehrere Netzeinrichtungen zum Weiterleiten von Daten von Kommunikationsverbindungen aufweist
und wobei die Zugangseinrichtung
- eine Schnittstelle zum Aufbau einer Kommunikationsverbindung mit der zumindest einen Station (W-H) aufweist,
- derart ausgebildet ist, dass die Kommunikationsverbindung zwischen der Zugangseinrichtung und zumindest einer der Netzeinrichtungen nicht-verbindungsorientiert über ein gemeinsamgenutztes Medium erfolgt und,
- dass sie für die Kommunikationsverbindung zwischen der Zugangseinrichtung (AP) und der Station (W-H) eine logische Punkt-zu-Punkt-Schnittstelle gemäß einem Punkt-zu-Punkt Protokoll vorsieht,
**dadurch gekennzeichnet, dass**
die Zugangseinrichtung (AP) derart ausgebildet ist, dass sie für die Station (W-H) die Zuordnung einer temporären Identifikationsadresse durch das Verwenden von Dienstekonfigurations-Client-Funktionen eines im Datennetz nicht-verbindungsorientiert anschließbaren Datenendgeräts (H) vom Datennetz anfordert und durch das Verwenden von Dienstekonfigurations-Server-Funktionen des Datennetzes (LAN; RAS) der Station (W-H) zuweist.

13. Zugangseinrichtung nach Anspruch 12,
die stationsseitig (W-H) als Funk-Basisstation und netzseitig (LAN) als Netzeinrichtung, insbesondere Brücke oder Hub, ausgebildet ist.

## Claims

1. Method for connecting at least one station (H; W-H) to a data network (LAN), the data network (LAN) having
- one or more network devices for forwarding data of a communications connection, and
- at least one access device (AP) having an interface (VL) for setting up a communications connection to the at least one station (W-H),
wherein
- the communications connection between the access device (AP) and at least one of the further network devices is established on a connectionless basis via a shared medium and a logical point-to-point data connection for the communications connection between the access device (AP) and the station (W-H) is set up and maintained in accordance with a point-to-point protocol,
**characterised in that**
the access device (AP) for the station (W-H) requests the data network to allocate a temporary identification address by using service configuration client functions of a data terminal device (H) that can be connected on a connectionless basis in the data network and assigns said address to the station (W-H) by using service configuration server functions of the data network (LAN; RAS).

2. Method according to Claim 1, wherein
the data network (LAN) includes basic functions for autonomous operation of the data network (LAN).

3. Method according to one of the Claims 1 to 2, wherein the access device (AP) exchanges the data to be exchanged with the station (W-H) via the communications connection in a transmission frame typical of a point-to-point connection (PPP) and converts this data into a transmission frame corresponding to the connectionless network-internal connection.

4. Method according to one of the Claims 1 to 3, wherein a point-to-point protocol of a cellular telecommunications network is used between the station (W-H) and the access device (AP).

5. Method according to one of the Claims 1 to 4, wherein the access device (AP) requests an IP address, particularly by means of a DHCP client function, from the data network (LAN) and passes this on to the station (W-H) by means of a point-to-point protocol.

6. Method according to one of the Claims 1 to 5, wherein the access device (AP) initiates or performs the conversion of a PPP transmission frame to an Ethernet transmission frame and/or vice versa.

7. Method according to one of the Claims 1 to 6, wherein an air interface protocol or standard is used as the point-to-point protocol between the access device (AP) and the station (W-H), particularly the Bluetooth standard, the DECT standard, the HomeRF standard, the IEEE 802.11 standard, the IEEE 802.11b standard, the IEEE 802.11a standard, the HiperLAN standard, the HiperLAN2 standard, the GSM standard or the UMTS standard.

8. Method according to one of the Claims 1 to 7, wherein following successful assignment of an IP address to the station (W-H) by the access device (AP), a DHCP client function of the access device (AP) is relinquished in favour of the DHCP client function of the station (W-H) and the further service configuration is performed by the station (W-H) via DHCP client functions of the station (W-H) and by the DHCP server function of the data network (LAN).

9. Data network (LAN), wherein the data network (LAN) has
- one or more network devices for forwarding data of a communications connection, and
- at least one access device (AP) having an interface for setting up a communications connection to the at least one station (W-H),
- wherein the access device (AP) is implemented such that the communications connection between the access device and at least one of the network devices (hub, bridge) is established on a connectionless basis via a shared medium
- and for the communications connection between the access device and the station (W-H) it provides a logical point-to-point interface conforming to a point-to-point protocol,
**characterised in that**
the access device (AP) is implemented such that it requests the data network to assign a temporary identification address for the station (W-H) by using service configuration client functions of a data terminal device (H) that can be connected on a connectionless basis in the data network and assigns said address to the station (W-H) by using service configuration server functions of the data network (LAN; RAS).

10. Data network according to Claim 9, wherein the data network is a local area data network (LAN), particularly conforming to the Ethernet standard.

11. Data network according to Claim 10 or 9, wherein the data network (LAN) includes basic functions for autonomous operation of the data network (LAN).

12. Access device (AP) for a data network (LAN),
wherein the data network (LAN) has one or more network devices for forwarding data of a communications connection
and wherein the access device
- has an interface for setting up a communications connection to the at least one station (W-H),
- is implemented such that the communications connection between the access device and at least one of the network devices is established on a connectionless basis via a shared medium, and
- it provides a logical point-to-point interface conforming to a point-to-point protocol for the communications connection between the access device (AP) and the station (W-H),
**characterised in that**
the access device (AP) is implemented such that it requests the data network to assign a temporary identification address to the station (W-H) by using service configuration client functions of a data terminal device (H) that can be connected on a connectionless basis in the data network and assigns said address to the station (W-H) by using service configuration server functions of the data network (LAN; RAS).

13. Access device according to Claim 12, which is implemented on the station side (W-H) as a radio base station and on the network side (LAN) as a network device, particularly a bridge or hub.

## Revendications

1. Procédé de raccordement d'au moins une station (H; W-H) à un réseau de données (LAN), le réseau de données (LAN) comprenant
- un ou plusieurs dispositifs de réseau pour la retransmission de données de connexions de communication
- et au moins un dispositif d'accès (AP) avec une interface (VL) pour l'établissement d'une connexion de communication avec l'au moins une station (W-H),
- la connexion de communication entre le dispositif d'accès (AP) et au moins l'un des autres dispositifs de réseau se faisant de manière non orientée connexion par l'intermédiaire d'un médium partagé et une connexion logique de données de point à point étant, pour la connexion de communication entre le dispositif d'accès (AP) et la station (W-H), établie et maintenue selon un protocole de point à point,
**caractérisé en ce que** le dispositif d'accès (AP) demande au réseau de données, pour la station (W-H), l'affectation d'une adresse temporaire d'identification par l'utilisation de fonctions client de configuration de services d'un terminal de données (H) raccordable de manière non orientée connexion dans le réseau de données et procède à l'affectation à la station (W-H) en utilisant des fonctions serveur de configuration de services du réseau de données (LAN; RAS).

2. Procédé selon la revendication 1, dans lequel le réseau de données (LAN) comprend des fonctions de base pour un fonctionnement autonome du réseau de données (LAN).

3. Procédé selon l'une des revendications 1 à 2, dans lequel le dispositif d'accès (AP) échange, avec la station (W-H), les données à échanger via la connexion de communication, dans une trame de transmission habituelle à une connexion de point à point et convertit ces données en une trame de transmission correspondante dans la connexion interne du réseau non orientée connexion.

4. Procédé selon l'une des revendications 1 à 3, dans lequel est utilisé, en tant que protocole de point à point entre la station (W-H) et le dispositif d'accès (AP), un protocole de point à point d'un réseau de télécommunications cellulaire.

5. Procédé selon l'une des revendications 1 à 4, dans lequel le dispositif d'accès (AP) demande au réseau de données (LAN) une adresse IP, en particulier au moyen d'une fonction client DHCP, et la retransmet à la station (W-H) au moyen d'un protocole de point à point.

6. Procédé selon l'une des revendications 1 à 5, dans lequel le dispositif d'accès (AP) provoque ou effectue la conversion d'une trame de transmission PPP en une trame de transmission Éthernet et/ou inversement.

7. Procédé selon l'une des revendications 1 à 6, dans lequel est utilisé, en tant que protocole de point à point entre le dispositif d'accès (AP) et la station (W-H), un protocole ou standard d'interface aérienne, en particulier le standard Bluetooth, le standard DECT, le standard HomeRF, le standard IEEE 802.11, le standard IEEE 802.11 b, le standard IEEE 802.11a, le standard HiperLAN, le standard HiperLAN2, le standard GSM ou le standard UMTS.

8. Procédé selon l'une des revendications 1 à 7, dans lequel une fonction client DHCP du dispositif d'accès (AP), après l'affectation réussie d'une adresse IP à la station (W-H), est abandonnée par le dispositif d'accès (AP) au profit de la fonction client DHCP de la station (W-H) et l'autre configuration de services est effectuée par la station (W-H) par l'intermédiaire de fonctions client DHCP de la station (W-H) et par la fonction serveur DHCP du réseau de données (LAN).

9. Réseau de données (LAN), le réseau de données (LAN) comprenant
- un ou plusieurs dispositifs de réseau pour la retransmission de données de connexions de communication
- et au moins un dispositif d'accès (AP) avec une interface pour l'établissement d'une connexion de communication avec l'au moins une station (W-H),
- le dispositif d'accès (AP) étant réalisé de manière telle que la connexion de communication entre le dispositif d'accès et au moins l'un des dispositifs de réseau (hub, bridge) se fait de manière non orientée connexion par l'intermédiaire d'un médium partagé
- et que, pour la connexion de communication entre le dispositif d'accès et la station (W-H), il prévoit une interface logique de point à point selon un protocole de point à point,
**caractérisé en ce que** le dispositif d'accès (AP) est réalisé de manière telle qu'il demande au réseau de données, pour la station (W-H), l'affectation d'une adresse temporaire d'identification par l'utilisation de fonctions client de configuration de services d'un terminal de données (H) raccordable de manière non orientée connexion dans le réseau de données et procède à l'affectation à la station (W-H) en utilisant des fonctions serveur de configuration de services du réseau de données (LAN; RAS).

10. Réseau de données selon la revendication 9, le réseau de données étant un réseau de données local (LAN), en particulier selon le standard Éthernet.

11. Réseau de données selon la revendication 10 ou 9, le réseau de données (LAN) comprenant des fonctions de base pour un fonctionnement autonome du réseau de données (LAN).

12. Dispositif d'accès (AP) pour un réseau de données (LAN), dans lequel le réseau de données (LAN) comprend un ou plusieurs dispositifs de réseau pour la retransmission de données de connexions de communication et
dans lequel le dispositif d'accès
- comprend une interface pour l'établissement d'une connexion de communication avec l'au moins une station (W-H),
- est réalisé de manière telle que la connexion de communication entre le dispositif d'accès et au moins l'un des dispositifs de réseau se fait de manière non orientée connexion par l'intermédiaire d'un médium partagé et
- qu'il prévoit, pour la connexion de communication entre le dispositif d'accès (AP) et la station (W-H), une interface logique de point à point selon un protocole de point à point,
**caractérisé en ce que** le dispositif d'accès (AP) est réalisé de manière telle qu'il demande au réseau de données, pour la station (W-H), l'affectation d'une adresse temporaire d'identification par l'utilisation de fonctions client de configuration de services d'un terminal de données (H) raccordable de manière non orientée connexion dans le réseau de données et procède à l'affectation à la station (W-H) en utilisant des fonctions serveur de configuration de services du réseau de données (LAN; RAS).

13. Dispositif d'accès selon la revendication 12, lequel est réalisé en tant que station radio de base côté station (W-H) et, côté réseau (LAN), en tant que dispositif de réseau, en particulier en tant que pont ou hub.
